(19) Europäisches Patentamt / European Patent Office / Office européen des brevets

(11) **EP 4 006 838 A1**

(12) **DEMANDE DE BREVET EUROPEEN**

(43) Date de publication:
**01.06.2022 Bulletin 2022/22**

(21) Numéro de dépôt: **21211211.4**

(22) Date de dépôt: **30.11.2021**

(51) Classification Internationale des Brevets (IPC):
**G06T 7/70** *(2017.01)* **G06T 7/80** *(2017.01)*

(52) Classification Coopérative des Brevets (CPC):
**G06T 7/70; G06T 7/80;** G06T 2207/10016;
G06T 2207/20084; G06T 2207/30196

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **30.11.2020 FR 2012410**

(71) Demandeur: **Idemia Identity & Security France**
**92400 Courbevoie (FR)**

(72) Inventeurs:
• **COMBALDIEU, Louis**
**92400 Courbevoie (FR)**
• **CSILLAG, Dora**
**92400 Courbevoie (FR)**

(74) Mandataire: **Regimbeau**
**20, rue de Chazelles**
**75847 Paris Cedex 17 (FR)**

(54) **PROCÉDÉS DE CALIBRATION D'UNE CAMÉRA ET DE MESURE DE DISTANCES RÉELLES À PARTIR D'UNE IMAGE ACQUISE PAR LA CAMÉRA**

(57) La présente invention concerne un procédé de détermination de paramètres de calibration d'une caméra, comprenant des étapes de :

(a) Obtention d'au moins une image acquise par ladite caméra représentant une pluralité d'éléments d'intérêt d'une catégorie donnée ;

(b) Détection desdits éléments d'intérêt dans ladite image ;

(c) Sélection d'un sous-ensemble des éléments d'intérêt détectés ;

(d) Pour chaque élément d'intérêt dudit sous-ensemble, expression d'une dimension caractéristique dudit élément d'intérêt en fonction de la représentation dudit élément d'intérêt dans l'image et des paramètres de calibration au moyen d'un modèle géométrique ;

(e) Détermination, en utilisant un algorithme d'optimisation, de la valeur des paramètres de calibration minimisant un écart entre les expressions de ladite dimension caractéristique et une valeur moyenne attendue de ladite dimension caractéristique.

La présente invention concerne également un procédé de calibration d'une caméra et un procédé de mesure d'une distance réelle à partir d'une image acquise par une caméra.

FIG. 2

EP 4 006 838 A1

**Description**

DOMAINE TECHNIQUE GENERAL

La présente invention concerne la surveillance vidéo, et concerne plus précisément un procédé de détermination automatique de paramètres de calibration d'une caméra en vue de calculer des distances réelles à partir des images de la caméra.

ETAT DE L'ART

On connait des algorithmes de détection, par exemple mis en œuvre grâce à des réseaux de neurones notamment de type à convolution, ou CNN (Convolutional Neural Networks), permettant d'identifier des éléments d'intérêt sur des images.

Par exemple, on sait détecter les personnes ou les visages sur des images de caméra de sécurité.

Partant de là, si l'on connait des paramètres de la caméra (dits paramètres de calibration) telle que la hauteur à laquelle elle est disposée, de simples considérations géométriques et des projections permettent d'estimer les grandeurs des éléments d'intérêts détectés, et de façon générale de mesurer toute distance « réelle » dans la scène observée.

La difficulté est essentiellement liée au fait de déterminer facilement les paramètres de calibration. En effet, des milliers de caméras sont déjà installées sans que l'on connaisse leurs paramètres. Il est bien entendu possible d'envoyer des personnes prendre des mesures sur toutes ces caméras, mais ce serait long, coûteux et contraignant.

Par conséquent, il a été proposé une méthode de calibration automatique décrite dans le document A simplified nonlinear regression method for human height estimation in video surveillance, Li, S., Nguyen, V.H., Ma, M. *et al.*

Dans cette méthode, on choisit des sujets marchant devant la caméra, de sorte à acquérir plusieurs images dans lesquelles ils sont à diverses positions de l'espace. Ensuite, par régression sur les positions de leur tête et de leurs pieds on peut déterminer les paramètres de calibration.

Cette méthode est automatique mais reste contraignante car il faut annoter manuellement avec précision tête et pieds des sujets. De plus, pour que les paramètres déterminés soient fiables, il faut que les sujets se déplacent sur tout le champ de la caméra en restant bien droits, sans occultation. On ne peut donc pas faire ça avec des personnes aléatoires, il est nécessaire de demander à des personnes d'avoir le rôle de sujet et de se déplacer volontairement devant la caméra.

Alternativement, il a ainsi été proposé dans le document Surveillance Camera Autocalibration based on Pedestrian Height Distributions, Jingchen Liu, Robert T. Collins, Yanxi Li, de s'appuyer sur l'estimation des points de fuite pour évaluer les paramètres de calibration de la caméra. On peut ainsi utiliser n'importe quelles images de la caméra tant qu'elles représentent beaucoup de personnes supposées verticales (sans devoir demander spécifiquement à un sujet de marcher).

Cependant, on constate qu'estimer les points de fuite reste une tâche complexe en soi, parfois difficile à généraliser et constitue un objectif trop coûteux, de sorte que cette méthode n'apporte pas satisfaction.

Il serait par conséquent souhaitable de disposer d'une nouvelle solution de détermination automatique de paramètres de calibration d'une caméra, qui s'avère complètement automatique, simple, robuste et universelle

PRESENTATION DE L'INVENTION

Selon un premier aspect, la présente invention concerne un procédé de détermination d'au moins un paramètre de calibration d'une caméra, caractérisé en ce qu'il comprend la mise en œuvre par des moyens de traitement de données d'un deuxième serveur, d'étapes de :

> (a) Obtention d'au moins une image acquise par ladite caméra représentant une pluralité d'éléments d'intérêt d'une catégorie donnée ;
> (b) Détection desdits éléments d'intérêt dans ladite image ;
> (c) Sélection des éléments d'intérêt pertinents pour la calibration parmi les éléments d'intérêt détectés ;
> (d) Pour chaque élément d'intérêt sélectionné, expression d'une dimension caractéristique dudit élément d'intérêt en fonction de la représentation dudit élément d'intérêt dans l'image et de l'au moins un paramètre de calibration au moyen d'un modèle géométrique ;
> (e) Détermination, en utilisant un algorithme d'optimisation, de la valeur du ou des paramètres de calibration minimisant un écart entre les expressions de ladite dimension caractéristique et une valeur moyenne attendue de ladite dimension caractéristique.

Selon des caractéristiques avantageuses et non-limitatives :

L'étape (b) est mise en œuvre au moyen d'un réseau de neurones à convolution, CNN.

L'étape (b) comprend le calcul, pour chaque élément d'intérêt détecté d'un score de qualité représentatif de la pertinence dudit élément d'intérêt pour la calibration, l'étape (c) utilisant lesdits scores de qualité.

L'étape (b) comprend la détermination, pour chaque élément d'intérêt détecté, d'un caractère mobile ou immobile, seuls les éléments d'intérêts déterminés mobiles étant sélectionnés à l'étape (c).

Les éléments d'intérêts sont les personnes.

Ladite dimension caractéristique d'une personne est la taille de la personne.

L'au moins un paramètre de calibration de la caméra est choisi parmi :

- un angle d'inclinaison transverse de la caméra ;
- une distance focale de la lentille de la caméra ;
- une hauteur à laquelle est disposée la caméra.

Ledit modèle géométrique permet d'exprimer la taille Y d'une personne en fonction de ses coordonnées extrémales yf, yh dans l'image et des paramètres de calibration θ, f et c grâce à la formule :

$$\hat{Y}(y_f, y_h) = \frac{-\hat{f}\,\hat{c}\left(\tan^2\hat{\theta} + 1\right) \cdot (y_f - y_h)}{\tan\hat{\theta} \cdot y_f y_h - \hat{f}\,y_f + \hat{f}\tan^2\hat{\theta}\,y_h - \hat{f}^2\tan\hat{\theta}}.$$

Ledit algorithme d'optimisation est une méthode aux moindres carrés.

Selon un deuxième aspect, l'invention concerne un procédé de calibration d'une caméra, caractérisé en ce qu'il comprend la mise en œuvre par des moyens de traitement de données d'un premier serveur connecté à la caméra, d'une requête auprès d'un deuxième serveur connecté au premier serveur via un réseau de communication, de mise en œuvre d'un procédé de détermination d'au moins un paramètre de calibration de ladite caméra selon le premier aspect, ladite requête comprenant au moins une image acquise par ladite caméra ; puis une étape (e) de réception en retour de la valeur déterminée de l'au moins un paramètre de calibration d'une caméra, et application de cette valeur dans ledit modèle géométrique.

Selon un troisième aspect, l'invention concerne un procédé de mesure d'une distance réelle à partir d'une image acquise par une caméra, caractérisé en ce qu'il comprend la mise en œuvre par des moyens de traitement de données d'un premier serveur connecté à la caméra, d'un procédé de calibration de ladite caméra selon le deuxième aspect, puis une étape (f) de calcul de ladite distance réelle en fonction de coordonnées dans l'image des points représentant des positions de l'espace espacées de ladite distance réelle, au moyen dudit modèle géométrique.

Selon des caractéristiques avantageuses et non-limitatives :
Ledit modèle géométrique permet d'exprimer les coordonnées X, Z d'une position de l'espace en fonction des coordonnées x, y dans l'image du point p représentant ladite position de l'espace et des paramètres de calibration θ, f et c grâce à la formule :

$$\begin{cases} \hat{Z}(p) = \dfrac{y*\hat{c}*\sin(\hat{\theta}) - \hat{f}*\hat{c}*\cos(\hat{\theta})}{y*\cos(\hat{\theta}) + \hat{f}*\sin(\hat{\theta})} \\ \hat{X}(p) = x * (\cos(\hat{\theta}) * \hat{Z} - \hat{c} * \sin(\hat{\theta}))/\hat{f} \end{cases}.$$

La distance réelle entre deux positions de l'espace représentées dans l'image par des points p1, p2 est donnée par la formule :

$$\hat{D}(p_1, p_2) = \sqrt{(\hat{X}_1 - \hat{X}_2)^2 + (\hat{Z}_1 - \hat{Z}_2)^2}.$$

Le procédé comprend la vérification qu'une distance réelle entre deux personnes représentées sur ladite image est supérieure à un seuil prédéterminé.

Selon un quatrième et un cinquième aspect, sont proposés un produit programme d'ordinateur comprenant des instructions de code pour l'exécution d'un procédé selon le premier, le deuxième, ou le troisième aspect de détermination d'au moins un paramètre de calibration d'une caméra, de calibration d'une caméra, ou de mesure d'une distance réelle à partir d'une image acquise par une caméra ; et un moyen de stockage lisible par un équipement informatique sur lequel un produit programme d'ordinateur comprend des instructions de code pour l'exécution d'un procédé selon le premier, le deuxième, ou le troisième aspect de détermination d'au moins un paramètre de calibration d'une caméra, de calibration d'une caméra, ou de mesure d'une distance réelle à partir d'une image acquise par une caméra.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- La figure 1 représente un modèle géométrique ;
- La figure 2 est un schéma d'une architecture pour la mise en œuvre des procédés selon l'invention ;
- La figure 3 illustre les étapes d'un mode de réalisation préféré d'un procédé de suivi selon l'invention ;
- La figure 4 représente un exemple de sélection ou non d'éléments d'intérêt détectés ;
- Les figures 5a et 5b illustre la mise en œuvre d'un procédé de mesure de distances réelles selon un aspect de l'invention.

DESCRIPTION DETAILLEE

*Architecture*

Selon plusieurs aspects complémentaires la présente invention peut impliquer :

- un procédé de détermination d'au moins un paramètre de calibration d'une caméra 2 ;
- un procédé de calibration de ladite caméra 2 ;
- un procédé de mesure d'une distance réelle à partir d'une image acquise par la caméra 2.

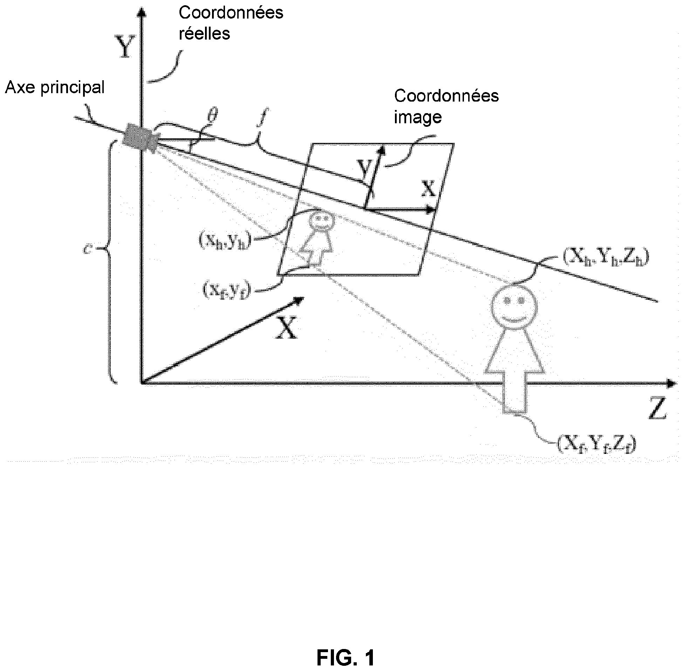

En référence à la **Figure 1,** par paramètre de calibration de la caméra, on entend un paramètre permettant de mettre en correspondance les cordonnées spatiales d'un point dans le champ de la caméra, dites coordonnées « réelles » car exprimées dans un repère terrestre (par exemple les coordonnées $X_f$, $Y_f$, $Z_f$ des pieds de la personne ou les coordonnées $X_h$, $Y_h$, $Z_h$ du sommet de la tête de la personne) avec les coordonnées planes de la représentation de ce point dans l'image acquise, dites coordonnées « image » (les coordonnées $x_f$, $y_f$, de la représentation des pieds de la personne ou les coordonnées $x_h$, $y_h$, du sommet de la tête de la personne), i.e. sa projection.

Ledit paramètre de calibration est ainsi avantageusement choisi parmi :

- L'angle d'inclinaison transverse de la caméra 2 (appelé tangage, ou *pitch* en anglais, noté 0 dans la figure 1), i.e. l'angle entre l'axe principal de la caméra 2 et une direction horizontale ;
- La distance focale de la lentille de la caméra 2 (focal, notée f) ;
- La hauteur à laquelle est disposée la caméra 2 (*caméra height,* notée c).

De manière avantageuse, le procédé selon le premier aspect comprend la détermination de chacun de ces trois paramètres de calibration. A noter qu'il reste tout à fait possible que l'un ou l'autre de ces trois paramètres soit connu, directement ou indirectement (par exemple une caméra peut avoir une distance focale f calibrée, ou bien la hauteur c peut avoir été expressément choisie à la pose de la caméra).

La caméra 2 est préférentiellement fixe, au moins en ce qui concerne les paramètres de calibration. Elle pourrait par exemple être montée sur un rail autorisant des translations horizontales. Néanmoins, la caméra pourrait être totalement mobile à condition que ses mouvements soient connus, l'homme du métier saura en effet appliquer les équations de changement de repère correspondantes.

Certaines hypothèses sont en outre avantageusement faites sur le contexte :

- La caméra 2 est supposée disposée « droite », i.e. horizontalement par rapport au sol, ce qui équivaut à un angle longitudinal (appelé roulis, ou *roll*) de 0°,
- L'angle normal (appelé lacet ou *yaw*) est arbitrairement fixé à 0°,
- La distorsion due à la lentille est supposée négligeable.

A noter que tout ou partie de ces derniers paramètres peuvent alternativement être considérés comme des paramètres de calibrations et eux-mêmes déterminés dans le présent procédé.

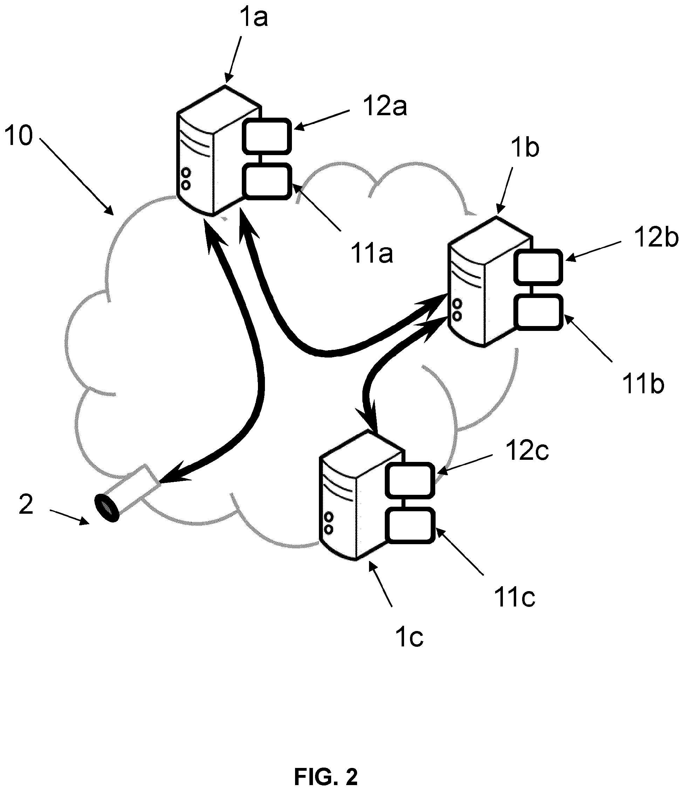

Les présents procédés sont mis en œuvre au sein d'une architecture telle que représentée par la **Figure 2,** grâce à un ou plusieurs serveurs 1a, 1b, 1c et une caméra 2.

Le premier serveur 1a est un équipement de contrôle de la caméra 2. Plus précisément, c'est ce serveur qui est supposé être l'équipement recevant les images acquises par la caméra, mettant en œuvre des éventuels traitements sur ces images, et permettant notamment à des agents de sécurité de visionner ces images. Ainsi la caméra 2 (et le plus souvent un grand nombre de caméra) est connectée au premier serveur 1a, généralement directement. Par exemple, la caméra 2 peut être une caméra de surveillance d'une zone d'un aéroport, et alors le serveur 1a est typiquement celui d'un poste de sécurité de l'aéroport. Naturellement, la caméra 2 peut en pratique acquérir des vidéos plutôt que des images isolées, mais on considérera par commodité une vidéo comme une séquence d'images.

Le deuxième serveur 1b est le serveur de détermination de paramètre de calibration de ladite caméra 2. Il peut être confondu avec le premier serveur 1a, mais est typiquement un serveur distinct, notamment celui d'un fournisseur de solution de sécurité. Le premier serveur 1a peut lui transférer une ou plusieurs images de la caméra 2, et recevoir en retour le ou les paramètres de calibration. En d'autres termes, le deuxième serveur 1b est typiquement indirectement connecté à la caméra 2, i.e. via le premier serveur 1a. Le deuxième serveur 1b peut lui-même être connecté à une pluralité de premiers serveurs 1a.

Comme on le verra, le procédé peut éventuellement comprendre l'apprentissage d'un réseau de neurones à convolution, CNN, de détection et le cas échéant le troisième serveur 1c est un équipement d'apprentissage associé. A nouveau il peut être confondu avec l'un ou l'autre des serveurs 1a, 1b.

Dans tous les cas, chaque serveur 1a, 1b, 1c est typiquement un équipement informatique distant relié à un réseau étendu 10 tel que le réseau internet pour l'échange des données. Chacun comprend des moyens de traitement de données 11a, 11b, 11c de type processeur, et des moyens de stockage de données 12a, 12b, 12c telle qu'une mémoire informatique, par exemple un disque dur. La caméra 2 peut, comme expliqué, être directement connecté au premier serveur 1a, mais elle pourrait également lui être connectée via le réseau étendu 10.

L'éventuel troisième serveur 1c stocke préférentiellement une base de données d'apprentissage, i.e. un ensemble d'images d'apprentissage, c'est-à-dire sur lesquelles des éléments d'intérêt ont été déjà annotés, par exemple au moyen d'une boite englobante, ou bounding box en anglais.

*Détection et tracking*

On suppose que les images acquises par la caméra 2 (et transmises au premier serveur 1a) représentent une pluralité d'« éléments d'intérêt » d'une catégorie donnée.

Ici, le terme « élément d'intérêt » désigne toute représentation dans l'image d'une entité appartenant à ladite catégorie donnée et dont on souhaite la détection visuelle. En d'autres termes, la catégorie est prédéfinie, et on cherche à détecter toutes les occurrences d'éléments d'intérêt de cette catégorie, et pas d'autres catégorie.

Ladite catégorie correspond à un type au sens sémantique (on pourra parler de catégorie sémantique), et on comprend que la nature des éléments d'intérêt dépend de la catégorie donnée. En particulier, dans la suite de la présente description on s'intéressera à la catégorie « personne », i.e. on cherche à détecter des personnes et on suppose que l'image représente une pluralité de personne. Alternativement, les éléments d'intérêt pourront être des véhicules, des visages, etc.

On suppose qu'on dispose d'une valeur moyenne attendue d'une certaine « dimension caractéristique » des éléments d'intérêt de la même catégorie, connue statistiquement, par exemple la taille en ce qui concerne les personnes. Par « dimension caractéristique », on entend toute grandeur mesurable pour tous les éléments d'intérêts d'une catégorie, si possible facilement mesurable de manière fiable quelle que soit l'orientation de l'élément d'intérêt et/ou d'une variabilité faible dans la population des éléments d'intérêt de ladite catégorie. La taille est ainsi une bonne dimension caractéristique puisqu'elle varie dans le pire des cas du simple au double et est facilement mesurable tant que la personne est debout (ce qui est le cas le plus souvent), mais on pourrait prendre par exemple la longueur d'un bras ou le diamètre de la tête. Pour des éléments d'intérêt de catégorie voiture, on peut prendre par exemple le diamètre des roues.

Dans la suite de la présente description, on supposera que la taille moyenne des personnes est 1,80 m. Cette valeur peut surprendre et sembler élevée, mais comme on le verra, les boites englobantes qui sont détectés sont en pratique souvent un peu plus grandes que les personnes, et on entendra comme taille d'une personne la distance entre le bas et le haut de sa boite englobante si elle existait « réellement » (i.e. on approxime la taille d'une personne à la taille de sa boite englobante), d'où la valeur de 1,80 mètre (m) constatée. Un autre détecteur donnera par exemple 2 m comme valeur moyenne attendue, l'homme du métier saura mettre en œuvre une étude statistique pour déterminer cette valeur avec précision.

La « détection », ou « reconnaissance » d'un élément d'intérêt désigne le simple marquage d'un élément d'intérêt d'une catégorie connue dans une image. La détection combine ainsi la localisation (détermination de la position et la taille d'une boite englobant l'élément d'intérêt, dite boite de détection) et éventuellement la classification (détermination de sa catégorie, s'il y a plusieurs catégories détectables).

Par « suivi », on entend le « tracking » d'un élément d'intérêt sur plusieurs images, c'est-à-dire l'identification continue d'un même élément détecté d'image en image où il est présent de sorte à déterminer le déplacement de l'entité correspondante au cours du temps.

Pour cela, on référence chaque élément d'intérêt avec un identifiant, l'ensemble des occurrences d'un élément d'intérêt pour un identifiant donné étant appelé une « track ».

On fera la différence entre la « détection » et « l'identification » : alors que la détection se fait image par image, et ne fait pas de distinction entre les différents éléments d'une même catégorie, l'identification affecte aux détections les bons identifiants de sorte à ce que deux détections de la même entité sur deux images différentes aient le même identifiant, i.e. fasse partie de la même track. Par exemple, supposant que sur une première image soient identifiés comme « personne 1 » et « personne 2 » deux éléments de catégorie personne et que soient détectés dans une deuxième image à nouveau deux éléments de catégorie personne, l'identification permet de déterminer dans la deuxième image lequel est la personne 1/2 (voire même une personne 3)

L'identification peut, en d'autres termes, être vue comme la mise en correspondance d'un élément détecté avec une entité, c'est-à-dire la distinction entre les différents éléments de la même catégorie détectables dans une ou plusieurs images.

De nombreuses techniques d'association et de tracking sont connues de l'homme du métier.

*Détermination des paramètres de calibration*

Le procédé selon le premier aspect de détermination d'au moins un paramètre de calibration d'une caméra 2 est mis en œuvre par les moyens de traitement de données 11b du deuxième serveur 1b.

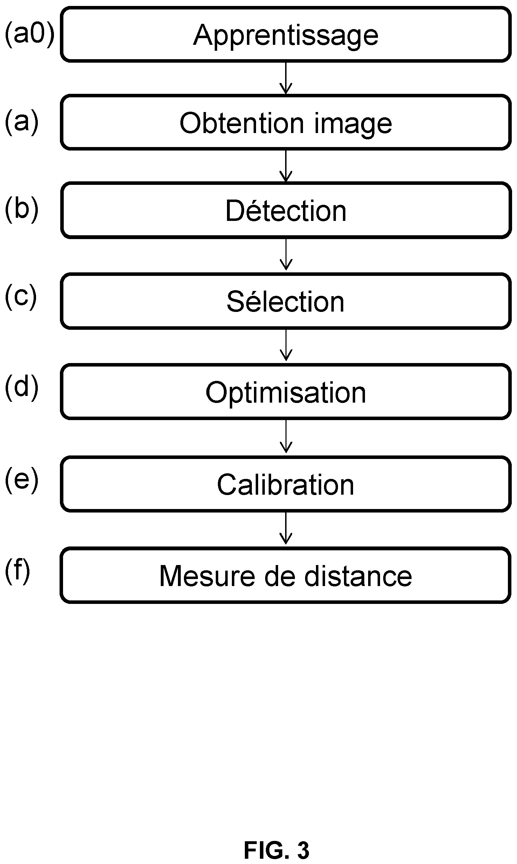

En référence à la **Figure 3,** il commence par une étape (a) d'obtention d'au moins une image acquise par ladite caméra 2 représentant une pluralité d'éléments d'intérêt d'une catégorie donnée (typiquement « personne »).

Typiquement, cette image est reçue depuis le premier serveur 1a, cette étape (a) consistant en une requête de détermination des paramètres de calibration de la part dudit premier serveur 1a. A noter que plusieurs images peuvent être transmises, voir une séquence d'images (une vidéo).

On suppose comme expliqué qu'un pré-tri est fait de sorte que l'image représente une pluralité d'éléments d'intérêt, si possible un grand nombre. Il est tout à fait possible que l'image soit transmise « à l'aveugle » par le premier serveur 1a, et ainsi que le procédé comprenne (lors de l'étape (b) suivante) la vérification que cette image représente une pluralité d'éléments d'intérêt. Il est même possible que plusieurs images soient transmises et que l'étape (b) comprenne le choix de la ou les images comprenant le plus (ou du moins un nombre suffisant) d'éléments d'intérêt.

En effet, l'étape (b) suivante est une étape de détection desdits éléments d'intérêt dans ladite image. Cette étape peut être mise en œuvre de n'importe quelle façon connue, en particulier soit via un algorithme adapté soit via un modèle appris, en particulier un réseau de neurones à convolution, CNN.

L'homme du métier connait de nombreux CNN de détection, par exemple un CNN basé sur l'architecture « Darknet-19 » et décrite dans le document *YOLO9000,* qui comprend 19 couches de convolution et 5 couches de pooling *MaxPool2x2* (Alternativement, on pourra également citer la version « Darknet-53 », à 53 couches de convolution, ou n'importe quelle architecture de type *VGG, RESNET, DENSNET,* etc.).

Dans le cas d'un CNN, le procédé comprend avantageusement une étape préalable (a0) d'apprentissage classique des paramètres dudit CNN par les moyens de traitement de données 11c du troisième serveur 1c à partir d'une base d'apprentissage. En d'autres termes, il apprend à reconnaître une ou plusieurs des catégories d'éléments déjà annotés dans les images d'apprentissage de cette base, en l'espèce ladite catégorie donnée. Il est tout à fait possible que le CNN soit entraîné de sorte à être capable de détecter des éléments d'intérêts d'autres catégories, mais cela ne servira pas à l'étape (b). A noter qu'il est également possible de prendre « sur étagère » un CNN existant pré-entraîné.

Chaque élément d'intérêt détecté est le plus souvent désigné par une « boite englobante », définie par un vecteur de valeurs caractéristiques, par exemple 4 valeurs numériques dont les coordonnées x, y (dans le référentiel de l'image) du centre de la boite et les hauteurs/largeur h, l de la boite. Alternativement, on pourra avoir un « masque » de segmentation de l'élément d'intérêt (i.e. une image dans laquelle tous les pixels de l'élément d'intérêt valent 1 et le reste 0), ou d'autres façon de désigner l'élément d'intérêt détecté connues de l'homme du métier.

On suppose à l'issue de l'étape (b) qu'on dispose d'un ensemble d'éléments d'intérêt détectés (éventuellement sur plusieurs images).

Dans une étape (c) suivante, on sélectionne un sous-ensemble de cet ensemble des éléments d'intérêt détectés. On reviendra plus loin sur cette étape de sélection, qui peut être très variable : elle peut aller de la simple sélection aléatoire d'un nombre prédéterminé d'éléments d'intérêt détectés à des mécanismes complexes de scoring.

Ensuite, dans une étape (d), pour chaque élément d'intérêt sélectionné (i.e. dudit sous-ensemble), une dimension caractéristique dudit élément d'intérêt est exprimée en fonction de la représentation dudit élément d'intérêt dans l'image et de l'au moins un paramètre de calibration au moyen d'un modèle géométrique.

Comme expliqué, ladite dimension caractéristique est typiquement la taille si les éléments d'intérêt sont de la catégorie personne, i.e. la distance des pieds à la tête, approximée comme la taille de la boite englobante (si elle existait dans la réalité).

L'étape (d) comprend préférentiellement au moins une mesure géométrique sur ladite représentation dudit élément d'intérêt dans l'image, typiquement la mesure des coordonnées (dans le repère de l'image) des pieds et du sommet de la tête de la personne détectée, notées respectivement $x_f$, $y_f$ et $x_h$, $y_h$ dans la figure 1. On comprend que la distance entre ces points (valant $\sqrt{((x_f-x_h)^2+(y_f-y_h)^2)}$) correspond à la taille de la personne dans l'image. A noter que cette mesure est automatique et facilement réalisable car comme expliqué le vecteur caractéristique d'une boite englobante de détection comprend généralement les coordonnées du centre de la boite x, y et ses hauteur/largeur h, l, de sorte qu'on peut très facilement poser par exemple $x_f = x_h = x$, $y_f = y-h/2$ et $y_h = y+h/2$.

Ledit modèle géométrique est un modèle de projection du référentiel « réel » de la scène observée par la caméra vers le référentiel « image ».

L'homme du métier pourra s'inspirer du modèle géométrique décrit dans le document A simplified nonlinear regression method for human height estimation in video surveillance, Li, S., Nguyen, V.H., Ma, M. *et al.* susmentionné.

En particulier, en orientant astucieusement les axes du référentiel terrestre (conformément à la figure 1) avec un axe Y vers le haut, Z en s'éloignant de la caméra 2, et X latéralement, en choisissant l'origine de ce repère comme le point du sol à la verticale de la caméra 2 (i.e. cette dernière a pour coordonnées (0, c, 0)), on peut définir une matrice de projection en fonction desdits 3 paramètres de calibration θ, f et c telle que :

$$\mathbf{P} = \begin{bmatrix} f & 0 & 0 \\ 0 & f & 0 \\ 0 & 0 & 1 \end{bmatrix} \cdot \begin{bmatrix} 1 & 0 & 0 \\ 0 & \cos\theta & -\sin\theta \\ 0 & \sin\theta & \cos\theta \end{bmatrix} \cdot \begin{bmatrix} 1 & 0 & 0 & 0 \\ 0 & 1 & 0 & -c \\ 0 & 0 & 1 & 0 \end{bmatrix}$$

$$= \begin{bmatrix} f & 0 & 0 & 0 \\ 0 & f\cos\theta & -f\sin\theta & -fc\cos\theta \\ 0 & \sin\theta & \cos\theta & -c\sin\theta \end{bmatrix},$$

On a alors

$$\begin{bmatrix} x \\ y \\ w \end{bmatrix} = \mathbf{P} \cdot \begin{bmatrix} X \\ Y \\ Z \\ 1 \end{bmatrix}$$

$$= \begin{bmatrix} f & 0 & 0 & 0 \\ 0 & f\cos\theta & -f\sin\theta & -fc\cos\theta \\ 0 & \sin\theta & \cos\theta & -c\sin\theta \end{bmatrix} \cdot \begin{bmatrix} X \\ Y \\ Z \\ 1 \end{bmatrix}$$

$$= \begin{bmatrix} fX \\ f\cos\theta \cdot Y - f\sin\theta \cdot Z - fc\cos\theta \\ \sin\theta \cdot Y + \cos\theta \cdot Z - c\sin\theta \end{bmatrix},$$

où X, Y et Z sont les cordonnées dans ledit référentiel réel et x, y et w les coordonnées dans le référentiel image. Naturellement, tout point de l'image a une même coordonnée w (l'image n'a pas de « profondeur »), de sorte qu'on a :

$$\begin{bmatrix} x \\ y \end{bmatrix} = \begin{bmatrix} fX/(\sin\theta \cdot Y + \cos\theta \cdot Z - c\sin\theta) \\ (f\cos\theta \cdot Y - f\sin\theta \cdot Z - fc\cos\theta)/(\sin\theta \cdot Y + \cos\theta \cdot Z - c\sin\theta) \end{bmatrix}.$$

En supposant que toute personne à ses pieds au sol aux coordonnées (X, 0, Z), sa tête est aux coordonnées (X, Y, Z) et sa taille est ainsi égale à Y.

On peut donc de manière particulièrement simple exprimer sa taille en fonction des coordonnées $y_f$, $y_h$ dans l'image (les hypothèses sur le fait que la caméra est « droite » font qu'en pratique on peut simplifier le calcul en posant $x_f = x_h$ de sorte que les termes associés à ces coordonnées s'annulent) et des paramètres de calibration $\theta$, f et c grâce à la formule :

$$\hat{Y}(y_f, y_h) = \frac{-\hat{f}\,\hat{c}\left(\tan^2\hat{\theta} + 1\right) \cdot (y_f - y_h)}{\tan\hat{\theta} \cdot y_f y_h - \hat{f}\,y_f + \hat{f}\tan^2\hat{\theta}\,y_h - \hat{f}^2\tan\hat{\theta}}.$$

Naturellement, $y_f$, $y_h$ sont des valeurs connues (mesurables sur l'image - comme expliqué avantageusement), et les inconnues sont en fait les paramètres de calibration. Le résultat est en outre une « estimation » de la taille Y.

On comprendra que la présente invention n'est pas liée à ce modèle et que l'homme du métier pourra exprimer la dimension caractéristique conformément à tout autre modèle géométrique incluant en particulier tout autre choix de repères.

Dans une étape finale (d), le procédé comprend la détermination, en utilisant un algorithme d'optimisation, de la valeur du ou des paramètres de calibration minimisant un écart entre les expressions de ladite dimension caractéristique et une valeur moyenne attendue de ladite dimension caractéristique.

De manière préférée, ledit algorithme d'optimisation est une méthode aux moindres carrés, en particulier la version dite par « régression non-linéaire robuste », voir par exemple la page https://scipycookbook.readthedocs.io/items/robust_regression.html. Cette version est particulièrement adaptée à des entrées bruitées, ce qui est souvent le cas des détections qui ne sont pas parfaites. N'importe quel algorithme d'optimisation est toutefois utilisable.

Mathématiquement, la méthode aux moindre carrés se traduit par la résolution du problème suivant :

$$\begin{bmatrix} \hat{f} \\ \hat{\theta} \\ \hat{c} \end{bmatrix} = \arg\min_{f,\theta,c} \sum_{i=1}^{N} \left(\hat{Y}_i - Y_{moy}\right)^2.$$

où $Y_{moy}$ est ladite valeur moyenne attendue de ladite dimension caractéristique (par exemple 1,80 m pour la taille).

A noter que naturellement toutes les personnes n'ont pas la même taille de sorte que ladite expression n'est jamais proche de 0, mais en pratique le fait de prendre une valeur moyenne marche très bien car l'intervalle de tailles observé reste relativement étroit (il n'y a pas de personnes de 3 m, et les personnes de plus de 2 m ou de moins d'1,50 m restent rares).

*Sélection des éléments d'intérêt*

Il est souhaitable que les éléments d'intérêts sélectionnés à l'étape (c) soient ceux les plus « pertinents » pour la calibration, i.e. ceux pour lesquels la dimension caractéristique telle qu'apparente sur l'image est la plus proche de la valeur moyenne attendue.

L'idée est de détecter et filtrer les éléments d'intérêt susceptibles de fausser le calcul.

On va à présent décrire plusieurs techniques de sélection qui pourront être utilisées alternativement ou en complément, le cas échéant à la suite.

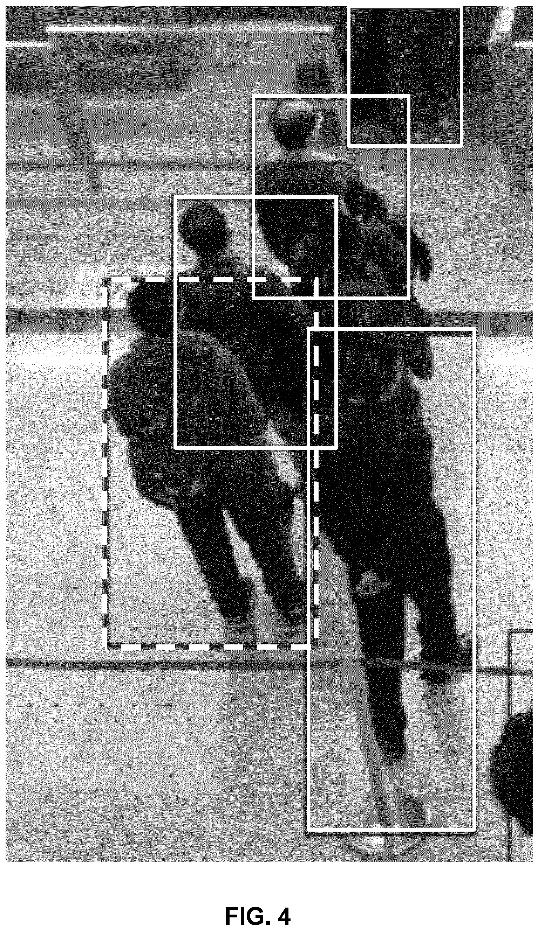

(1) On cherche à éviter les occlusions, les détections raccourcies ou tronquées, ou présentant des poses difficiles à gérer (par exemple, on préfère pour les personnes qu'elles soient frontales et entières, et non de dos ou de profil). Par exemple, dans la **Figure 4,** sur cinq éléments d'intérêts, seul l'un est gardé (celui ou la boite est en pointillés) : les trois du haut sont partiellement occlus, et celui de droite a une pose ambiguë. Celui de gauche (sélectionné), est aussi de dos mais avec une pose franche.

Pour mettre en œuvre cette sélection, on peut utiliser des techniques classiques de traitement d'image par exemple pour reconnaitre les occlusions. On peut par exemple requérir que les boites utilisées pour l'estimation soient espacées d'au moins 2% de la hauteur de l'image.

Alternativement ou en complément, l'étape (b) comprend préférentiellement le calcul, pour chaque élément d'intérêt détecté d'un score de qualité représentatif de la pertinence dudit élément d'intérêt pour la calibration, dit « bio-qualité », par exemple entre 0 et 1, l'étape (c) utilisant lesdits scores de qualité.

De manière particulièrement avantageuse, si l'étape (b) est mise en œuvre par un CNN, on peut prévoir que ce CNN calcule lui-même ce score.

Pour ce faire on peut « rallonger » le vecteur de représentation d'une boite englobante, en prévoyant un vecteur de score de bio-qualité prédite en même temps que les autres valeurs du vecteur de représentation. On peut apprendre au CNN à l'étape (a0) à calculer ce score simultanément avec la détection en annotant en conséquence la base d'apprentissage : un humain choisit manuellement un score entre 0 et 1 à chaque détection, et les CNN apprend ainsi à mettre ce score en tant que valeur comme une autre descriptive d'un élément d'intérêt (dans le vecteur de représentation).

La sélection à l'étape (c) peut prendre les N éléments d'intérêt avec le meilleur score de bio-qualité, filtre celles avec un score en dessous d'un seuil tel que 0.5, etc.

Une autre heuristique peut être de sélectionner les boites de détection avec un rapport hauteur/largeur supérieur ou inférieur à un certain seuil dépendant de l'objet. Pour les personnes, on pourra garder les détections avec un rapport supérieur à 1.5 par exemple. En effet, on s'attend à ce que les piétons debout non masqués par un obstacle aient ce genre de ratio.

(2) Dans le cas de personnes, on cherche à éviter celles immobiles car elles ont une probabilité non nulle d'être assises ou couchées. De plus, la surreprésentation d'une instance de détection quasiment identique peut lourdement biaiser l'étape d'optimisation à suivre.

Ainsi, l'étape (b) comprend avantageusement la détermination, pour chaque élément d'intérêt détecté, d'un caractère mobile ou immobile, seuls les éléments d'intérêts déterminés mobiles étant sélectionnés à l'étape (c).

Pour cela, il suffit d'avoir deux images successives et de mettre en œuvre du suivi : si le même élément d'intérêt est au même endroit dans les deux images, il est immobile, sinon il est mobile. L'homme du métier saura utiliser toute méthode de son choix pour déterminer un caractère mobile, y compris mettre en œuvre un CNN dédié sur l'image prédisant ce caractère mobile ou immobile (il n'est alors pas nécessaire qu'il y ait plusieurs images consécutives).

(3) On peut filtrer par défaut d'autres éléments d'intérêts fortement susceptibles de n'être pas pertinents :

- Ceux trop proches des bords de l'image ;
- Ceux statistiquement trop petits (pour une tranche de hauteur de l'image, la valeur "haute" des tailles peut être approximée. Les boites de hauteur inférieure à par exemple 70% de cette valeur sur cette tranche sont filtrées) ;
- Les éléments d'intérêt trop proches d'un élément d'intérêt d'une autre catégorie comme un banc ou un pilier ;
- Etc.

Dans tous les cas, s'il reste encore trop d'éléments d'intérêt après « présélection » (par exemple plus qu'une valeur N souhaitée), on peut toujours mettre en œuvre une sélection aléatoire.

*Calibration de la caméra*

Selon un deuxième aspect, est proposé le procédé de calibration d'une caméra 2, mis en œuvre par des moyens de traitement de données 11a du premier serveur 1a connecté à la caméra 2, grâce au procédé selon le premier aspect.

On suppose que le premier serveur 1a reçoit les images acquises par la caméra 2.

Ce procédé commence par la requête auprès du deuxième serveur 1b connecté au premier serveur 1a via le réseau de communication 10 de mise en œuvre du procédé selon le premier aspect, de détermination dudit au moins un paramètre de calibration de ladite caméra 2, ladite requête comprenant au moins une image acquise par ladite caméra 2. Cela correspond en pratique aux étapes (a) à (d) de la figure 3.

Ensuite, dans une étape (e), le procédé comprend la réception en retour de la valeur déterminée de l'au moins un paramètre de calibration d'une caméra 2, et l'application de cette valeur dans ledit modèle géométrique.

Par « application » on entend en particulier l'enregistrement de ces valeurs dans une mémoire 12a du premier serveur en tant que paramètres θ, f et c du modèle susmentionné. On parle de modèle géométrique « paramétré ».

*Mesure de distance réelle*

On peut alors utiliser le modèle géométrique paramétré pour mesurer une distance réelle (i.e. dans l'espace observé par la caméra 2) à partir de mesures dans l'image.

Selon un troisième aspect l'invention propose ainsi un procédé de mesure de distance réelle à partir d'une image acquise par une caméra 2, toujours mis en œuvre par les moyens de traitement de données 11a du premier serveur 1a connecté à la caméra 2.

Il comprend ainsi la mise en œuvre du procédé de calibration de ladite caméra 2 selon le deuxième aspect (une fois suffit, possiblement bien antérieurement), puis une étape (f) de calcul de ladite distance réelle en fonction de coordonnées dans l'image des points représentant des positions de l'espace espacées de ladite distance réelle, au moyen dudit modèle géométrique (paramétré puisque la calibration a eu lieu).

On sait déjà calculer la coordonnée Y d'une position de l'espace grâce à la formule plus haut.

Pour une distance, on a besoin de calculer les coordonnées X et Z d'une position de l'espace. Si l'on suppose qu'on mesure une distance dans le plan horizontal, on peut supposer que Y=0 (hauteur nulle).

Ledit modèle géométrique permet préférentiellement d'exprimer les coordonnées X, Z d'une position de l'espace en fonction des coordonnées x, y dans l'image du point p représentant ladite position de l'espace et des paramètres de calibration θ, f et c grâce à la formule :

$$\begin{cases} \hat{Z}(p) = \dfrac{y*\hat{c}*sin(\hat{\theta}) - \hat{f}*\hat{c}*cos(\hat{\theta})}{y*cos(\hat{\theta}) + \hat{f}*sin(\hat{\theta})} \\ \hat{X}(p) = x*(cos(\hat{\theta})*\hat{Z} - \hat{c}*sin(\hat{\theta}))/\hat{f} \end{cases}.$$

Alors, la distance réelle entre deux positions de l'espace représentées dans l'image par des points $p_1$, $p_2$ s'obtient simplement par la formule :

$$\hat{D}(p_1, p_2) = \sqrt{(\hat{X}_1 - \hat{X}_2)^2 + (\hat{Z}_1 - \hat{Z}_2)^2},$$

puisque l'on suppose que Y=0.

A noter qu'il reste tout à fait possible de mesurer n'importe quelle distance réelle dans l'espace en calculant Y pour chacun des points $p_1$, $p_2$ et en rajoutant un terme sur la différence entre $Y_1$ et $Y_2$ au carré dans la formule ci-avant.

Cette mesure de distance réelle permet très astucieusement de mesurer des distances entre éléments d'intérêt, et surtout entre personnes.

Cette dernière grandeur est particulièrement utile en ces temps de crise sanitaire, car il est ainsi possible de vérifier automatiquement que la distanciation physique est respectée dans un lieu public équipé de caméras tel qu'une gare ou un aéroport.

A ce titre, le procédé comprend avantageusement la vérification qu'une distance réelle entre deux personnes représentées sur ladite image est supérieure à un seuil prédéterminé, par exemple 1,50 m de distanciation physique.

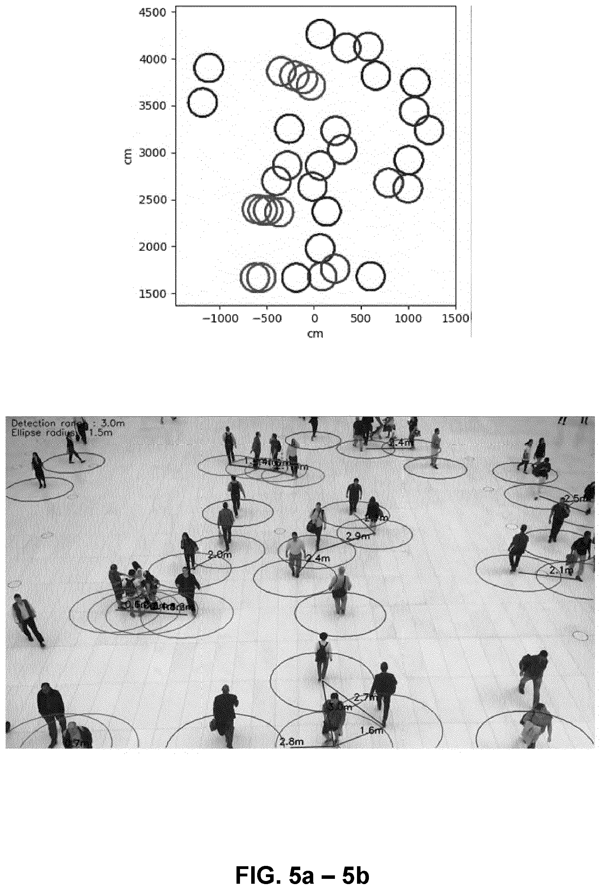

Les **Figure 5a, Figure 5b,** représentent ainsi visuellement le résultat de l'application d'un cercle de 3m de diamètre autour de chaque personne détectée, et la coloration du cercle en fonction de la distance réelle mesurée :

- un cercle est rouge s'il est associé à une personne présentant avec au moins une autre personne une distance réelle inférieure à 1,50m ;
- un cercle est bleu s'il est associé à une personne présentant avec chaque autre personne une distance réelle supérieure à 3m ;
- entre les deux (le cercle est associé à une personne présentant avec au moins une autre personne une distance réelle (minimale) d entre 1,50m et 3m) une combinaison linéaire de bleu et de rouge, par exemple selon la formule RGB(510-d*170 ; 0 ; d*170-255).

Dans la figure 5b, on reprojette les cercles dans l'image pour avoir une vue très ergonomique. A noter que cette vue offre une confirmation visuelle de la qualité de la calibration trouvée.

Si au moins un cercle est rouge, il n'est pas vérifié qu'une distance réelle entre deux personnes représentées sur ladite image est supérieure audit seuil prédéterminé, et une action peut être déclenchée (par exemple un message aux haut-parleurs demandant aux personnes de s'écarter).

*Produit programme d'ordinateur*

Selon un quatrième et un cinquième aspects, l'invention concerne un produit programme d'ordinateur comprenant des instructions de code pour l'exécution (en particulier sur les moyens de traitement de données 11a, 11b, 11c d'un ou plusieurs serveurs 1a, 1b, 1c) d'un procédé selon le premier aspect de détermination d'au moins un paramètre de calibration d'une caméra 2, un procédé selon le deuxième aspect de calibration d'une caméra 2, ou un procédé selon le troisième aspect de mesure d'une distance réelle à partir d'une image acquise par une caméra 2 ; ainsi que des moyens de stockage lisibles par un équipement informatique (une mémoire 12a, 12b, 12c d'un ou plusieurs serveurs 1a, 1b, 1c) sur lequel on trouve ce produit programme d'ordinateur.

**Revendications**

1. Procédé de détermination d'au moins un paramètre de calibration d'une caméra (2), **caractérisé en ce qu'**il comprend la mise en œuvre par des moyens de traitement de données (11b) d'un deuxième serveur (1b), d'étapes de :

   (a) Obtention d'au moins une image acquise par ladite caméra (2) représentant une pluralité d'éléments d'intérêt d'une catégorie donnée ;
   (b) Détection desdits éléments d'intérêt dans ladite image ;
   (c) Sélection des éléments d'intérêt pertinents pour la calibration parmi les éléments d'intérêt détectés ;
   (d) Pour chaque élément d'intérêt sélectionné, expression d'une dimension caractéristique dudit élément d'intérêt en fonction de la représentation dudit élément d'intérêt dans l'image et de l'au moins un paramètre de calibration au moyen d'un modèle géométrique ;
   (e) Détermination, en utilisant un algorithme d'optimisation, de la valeur du ou des paramètres de calibration minimisant un écart entre les expressions de ladite dimension caractéristique et une valeur moyenne attendue de ladite dimension caractéristique.

2. Procédé selon la revendication 1, dans lequel l'étape (b) est mise en œuvre au moyen d'un réseau de neurones à convolution, CNN.

3. Procédé selon l'une des revendications 1 et 2, dans lequel l'étape (b) comprend le calcul, pour chaque élément d'intérêt détecté d'un score de qualité représentatif de la pertinence dudit élément d'intérêt pour la calibration, l'étape (c) utilisant lesdits scores de qualité.

4. Procédé selon l'un des revendications 1 à 3, dans lequel l'étape (b) comprend la détermination, pour chaque élément d'intérêt détecté, d'un caractère mobile ou immobile, seuls les éléments d'intérêts déterminés mobiles étant sélectionnés à l'étape (c).

5. Procédé selon l'une des revendications 1 à 4, dans lequel les éléments d'intérêts sont les personnes.

6. Procédé selon la revendication 5, dans lequel ladite dimension caractéristique d'une personne est la taille de la personne.

7. Procédé selon l'une des revendications 1 à 6, dans lequel l'au moins un paramètre de calibration de la caméra (2) est choisi parmi :

   - un angle d'inclinaison transverse ($\theta$) de la caméra (2) ;
   - une distance focale (f) de la lentille de la caméra (2) ;
   - une hauteur (c) à laquelle est disposée la caméra (2).

8. Procédé selon les revendications 6 et 7 en combinaison, dans lequel ledit modèle géométrique permet d'exprimer la taille Y d'une personne en fonction de ses coordonnées extrémales $y_f$, $y_h$ dans l'image et des paramètres de calibration $\theta$, f et c grâce à la formule :

$$\hat{Y}(y_f, y_h) = \frac{-\hat{f}\,\hat{c}\left(\tan^2\hat{\theta} + 1\right)\cdot(y_f - y_h)}{\tan\hat{\theta}\cdot y_f y_h - \hat{f} y_f + \hat{f}\tan^2\hat{\theta} y_h - \hat{f}^2 \tan\hat{\theta}}.$$

9. Procédé selon l'une des revendications 1 à 8, dans lequel ledit algorithme d'optimisation est une méthode aux moindres carrés.

10. Procédé de calibration d'une caméra (2), **caractérisé en ce qu'**il comprend la mise en œuvre par des moyens de traitement de données (11a) d'un premier serveur (1a) connecté à la caméra (2), d'une requête auprès d'un deuxième serveur (1b) connecté au premier serveur (1a) via un réseau de communication (10) de mise en œuvre d'un procédé de détermination d'au moins un paramètre de calibration de ladite caméra (2) selon l'une des revendications 1 à 9, ladite requête comprenant au moins une image acquise par ladite caméra (2) ; puis une étape (e) de réception en retour de la valeur déterminée de l'au moins un paramètre de calibration d'une caméra (2), et application de cette valeur dans ledit modèle géométrique.

11. Procédé de mesure d'une distance réelle à partir d'une image acquise par une caméra (2), **caractérisé en ce qu'**il comprend la mise en œuvre par des moyens de traitement de données (11a) d'un premier serveur (1a) connecté à la caméra (2) d'un procédé de calibration de ladite caméra (2) selon la revendication 10, puis une étape (f) de calcul de ladite distance réelle en fonction de coordonnées dans l'image des points représentant des positions de l'espace espacées de ladite distance réelle, au moyen dudit modèle géométrique.

12. Procédé selon la revendication 11, dans lequel ledit modèle géométrique permet d'exprimer les coordonnées X, Z d'une position de l'espace en fonction des coordonnées x, y dans l'image du point p représentant ladite position de l'espace et des paramètres de calibration θ, f et c grâce à la formule :

$$\begin{cases} \hat{Z}(p) = \dfrac{y*\hat{c}*sin(\hat{\theta}) - \hat{f}*\hat{c}*cos(\hat{\theta})}{y*cos(\hat{\theta}) + \hat{f}*sin(\hat{\theta})} \\ \hat{X}(p) = x*(cos(\hat{\theta})*\hat{Z} - \hat{c}*sin(\hat{\theta}))/\hat{f} \end{cases},$$

La distance réelle entre deux positions de l'espace représentées dans l'image par des points $p_1$, $p_2$ étant donnée par la formule :

$$\hat{D}(p_1, p_2) = \sqrt{(\hat{X}_1 - \hat{X}_2)^2 + (\hat{Z}_1 - \hat{Z}_2)^2}.$$

13. Procédé selon l'une des revendications 11 et 12, comprenant la vérification qu'une distance réelle entre deux personnes représentées sur ladite image est supérieure à un seuil prédéterminé.

14. Produit programme d'ordinateur comprenant des instructions de code pour l'exécution d'un procédé selon l'une des revendications 1 à 13 de détermination d'au moins un paramètre de calibration d'une caméra (2), de calibration d'une caméra (2), ou de mesure d'une distance réelle à partir d'une image acquise par une caméra (2), lorsque ledit programme est exécuté sur un ordinateur.

15. Moyen de stockage lisible par un équipement informatique sur lequel un produit programme d'ordinateur comprend des instructions de code pour l'exécution d'un procédé selon l'une des revendications 1 à 13 de détermination d'au moins un paramètre de calibration d'une caméra (2), de calibration d'une caméra (2), ou de mesure d'une distance réelle à partir d'une image acquise par une caméra (2).

**FIG. 1**

**FIG. 2**

(a0) Apprentissage

(a) Obtention image

(b) Détection

(c) Sélection

(d) Optimisation

(e) Calibration

(f) Mesure de distance

**FIG. 3**

**FIG. 4**

FIG. 5a – 5b

Europäisches
Patentamt

European
Patent Office

Office européen
des brevets

# RAPPORT DE RECHERCHE EUROPEENNE

Numéro de la demande

EP 21 21 1211

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | SHENGZHE LI ET AL: "A simplified nonlinear regression method for human height estimation in video surveillance", EURASIP JOURNAL ON IMAGE AND VIDEO PROCESSING, vol. 2015, no. 1, 12 octobre 2015 (2015-10-12), XP055614623, DOI: 10.1186/s13640-015-0086-1 | 1,4-9, 14,15 | INV. G06T7/70 G06T7/80 |
| Y | * abrégé * * page 3, colonne 1 - page 5, colonne 1 * ----- | 2,3, 10-13 | |
| Y | NESHOV NIKOLAY ET AL: "Real-time estimation of distance between people and/or objects in video surveillance", 2020 23RD INTERNATIONAL SYMPOSIUM ON WIRELESS PERSONAL MULTIMEDIA COMMUNICATIONS (WPMC), IEEE, 19 octobre 2020 (2020-10-19), pages 1-4, XP033871764, DOI: 10.1109/WPMC50192.2020.9309512 | 2,3, 10-13 | |
| A | * abrégé * * page 2, colonne 2 - page 3, colonne 1; figure 4 * ----- | 1,4-9, 14,15 | DOMAINES TECHNIQUES RECHERCHES (IPC) G06T |
| A | FENGJUN LV ET AL: "Camera calibration from video of a walking human", IEEE TRANSACTIONS ON PATTERN ANALYSIS AND MACHINE INTELLIGENCE, IEEE COMPUTER SOCIETY, USA, vol. 28, no. 9, 1 septembre 2006 (2006-09-01), pages 1513-1518, XP008093695, ISSN: 0162-8828, DOI: 10.1109/TPAMI.2006.178 [extrait le 2006-07-13] * abrégé * ----- | 1-15 | |

-/--

Le présent rapport a été établi pour toutes les revendications

| Lieu de la recherche | Date d'achèvement de la recherche | Examinateur |
|---|---|---|
| Munich | 8 avril 2022 | Millet, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

## RAPPORT DE RECHERCHE EUROPEENNE

Numéro de la demande

EP 21 21 1211

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | LIU JINGCHEN ET AL: "Surveillance Camera Autocalibration based on Pedestrian Height Distributions", 2011 22ND BRITISH MACHINE VISION CONFERENCE, BMVC 2011 , 29 août 2011 (2011-08-29), pages 1-11, XP055826551, Extrait de l'Internet: URL:http://www.cse.psu.edu/~rtc12/Papers/LiuCollinsLiuBMVC2011.pdf * abrégé * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 8 avril 2022 | Millet, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LI, S. ; NGUYEN, V.H. ; MA, M.** *A simplified nonlinear regression method for human height estimation in video surveillance*

- **JINGCHEN LIU ; ROBERT T. COLLINS ; YANXI LI.** *Surveillance Camera Autocalibration based on Pedestrian Height Distributions*